Europäisches Patentamt

European Patent Office

Office européen des brevets

(19)

(11) **EP 0 945 796 A2**

(12) **EUROPEAN PATENT APPLICATION**

(43) Date of publication:
29.09.1999 Bulletin 1999/39

(51) Int. Cl.⁶: **G06F 9/455**

(21) Application number: **99105940.3**

(22) Date of filing: **24.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.03.1998 JP 8101098**

(71) Applicant: **NEC CORPORATION Tokyo (JP)**

(72) Inventor: **Hashimoto, Kazuya Minato-ku, Tokyo (JP)**

(74) Representative: **Betten & Resch Reichenbachstrasse 19 80469 München (DE)**

(54) **Simulation method, simulation apparatus and storage medium storing a simulation program**

(57)     In the simulation method and apparatus: even if a process varies in processing time each time it is executed, it is possible to simulate the process at high processing speed with high accuracy; and, an interruption occurring during the execution of routine processes ($31_1$ to $31_n$) is also simulated. In the simulation method: native version routine processes ($23_1$ to $23_n$) which a simulation means (24) may execute without interpretation are sequentially executed; and, a plurality of instructions which constitute non-routine processes having not passed a check are sequentially executed by a non-routine process simulation means (25). Based on a coefficient $\alpha$ representing a difference in performance between a target CPU and a host CPU, a host time measuring means (30) measures: a first time immediately before the execution of the native version routine processes ($23_1$ to $23_n$); and, a second time immediately before completion or interruption of the execution of the native version routine processes. Based on the first and the second time, a target time measuring means (27) measures a target time taken for the target CPU to execute the target program.

Fig.1

## Description

BACKGROUND OF THE INVENTION

1. Field of the Invention:

The present invention relates to a simulation method, simulation apparatus and a storage medium storing thereon a simulation program, and more particularly to a simulation method, simulation apparatus and a storage medium storing thereon a simulation program, in which the operation of a system (i.e., a target system such as facsimile machines, image processing units and the like, that is intended to be developed) is simulated by executing a program (i.e., target program) which a central processing unit, i.e., CPU forming the target system should execute.

2. Description of the Related Art:

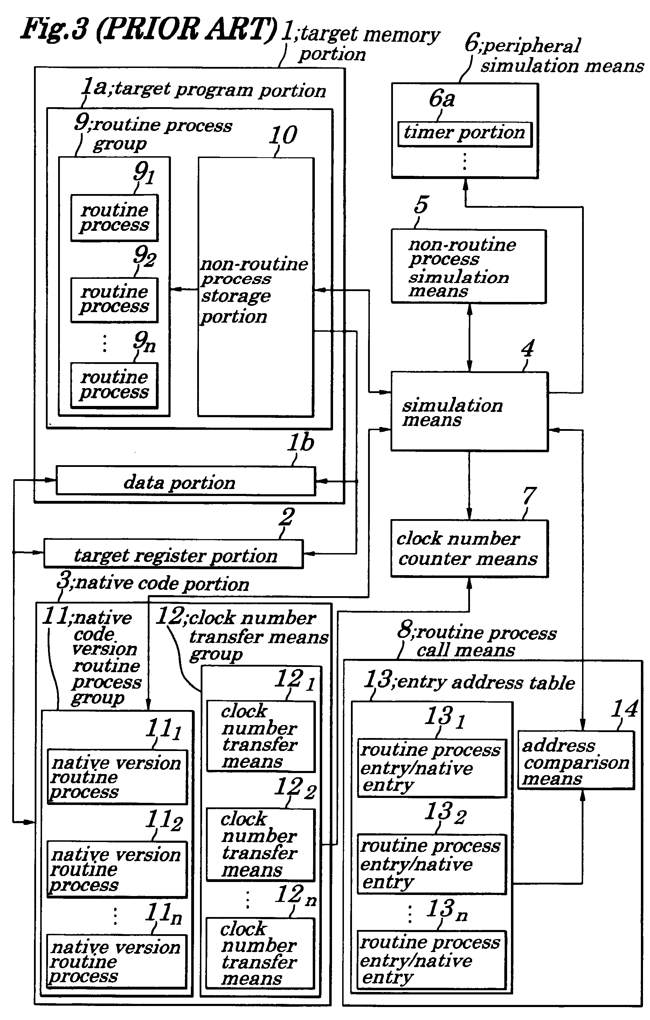

Fig. 3 shows a block diagram of an electric architecture of a conventional simulation apparatus disclosed in Japanese Patent Application Laid-Open No. Hei10-31595, which the inventor of the present invention in the subject patent application has previously proposed.

This conventional simulation apparatus is substantially constructed of: a target storage portion 1; a target register portion 2; a native code portion 3; a simulation means 4; a non-routine process simulation means 5; a peripheral simulation means 6; a clock number counter means 7; and, a routine process call means 8.

In the conventional simulation apparatus having the above construction, the target storage portion 1 is a memory simulating a memory of the target system, and is constructed of: a target program portion 1a, stored in which is a target program to be executed by a central processing unit (hereinafter referred to as the CPU) forming the target system; and, a data portion 1b for storing data which is used when the target program is executed.

The target program portion 1a is constructed of a routine process group 9 and a non-routine process storage portion 10. The routine process group 9 is constructed of a group of general-purpose routine processes $9_1$ to $9_n$ such as system calls of operating systems, run-time library functions and the like having passed a check such as debugging checks and the like. Here, the system calls, which are incorporated in the operating systems, mean fundamental functions and procedures called forth in the target program. On the other hand, a run-time library means a set of run-time library functions for supporting the execution of the target program when the target program is executed. The run-time library functions mean general-purpose functions, which are large in code size, and, therefore stored in a predetermined storage portion in the form of functions previously described in instruction codes. As for an instruction string which is of general-purpose type but large in size, it is not efficient to generate an instruction code each time a compiler generates the target program. Consequently, in the prior art, the instruction string is previously transformed into a suitable function described in the form of instruction codes. When the target program is generated, a code for calling the suitable function described above is generated, and thereafter linked in a linker.

On the other hand, the non-routine process storage portion 10 stores a plurality of non-routine processes which are inherent in the target program and still have not passed a check such as debugging process and the like.

The target register portion 2 is a register which simulates a register used by the target CPU. The native code portion 3 is constructed of: a native code version routine process group 11; and, a transfer means group 12. The native code version routine process group 11 is constructed of a plurality of native version routine processes $11_1$ to $11_n$ converted from the routine processes $9_1$ to $9_n$ , respectively, through the same operational instruction codes (i.e., native codes) which the simulation means 4 is capable of executing. The clock number transfer means group 12 is constructed of a plurality of clock number transfer means $12_1$ to $12_n$ which store clock numbers required to effect execution of the corresponding native version routine processes $11_1$ to $11_n$, the clock numbers being previously roughly calculated.

The simulation means 4 controls various portions of the simulation apparatus, and sequentially executes the native version routine processes $11_1$ to $11_n$. The non-routine process simulation means 5 is placed under the control of the simulation means 4 to interpret and execute, one-instruction by one-instruction, the non-routine processes which have been stored on the non-routine process storage portion 10. On the other hand, the peripheral simulation means 6 is constructed of a timer portion 6a and like components. The timer portion 6a causes interruptions at predetermined time intervals. In operation, the peripheral simulation means 6 operates in synchronization with the clock number transferred from the simulation means 4 so as to simulate in operation peripheral circuits (for example, such as timers, external communication equipments and the like) other than the target CPU.

The clock number counter means 7 counts clock numbers required to execute the target program in simulating the operation of the target system. The routine process call means 8 is constructed of an entry address table 13 and an address comparison means 14. The entry address table 13 is constructed of a plurality of pairs of routine process entries/native entries $13_1$ to $13_n$ which are combinations of: a plurality of routine process entries which represent start addresses of the individual routine processes $9_1$ to $9_n$ in the target program; and, a plurality of native entries which represent start addresses in the native version routine process group 11 of the native version routine processes $11_1$ to $11_n$ corresponding to the above routine process entries. The address comparison means 14 detects the starts of the routine processes by comparing: addresses of instruction codes which the simulation means 4 should subsequently execute; with the routine process entries/native entries $13_1$ to $13_n$ which form the entry address table 13.

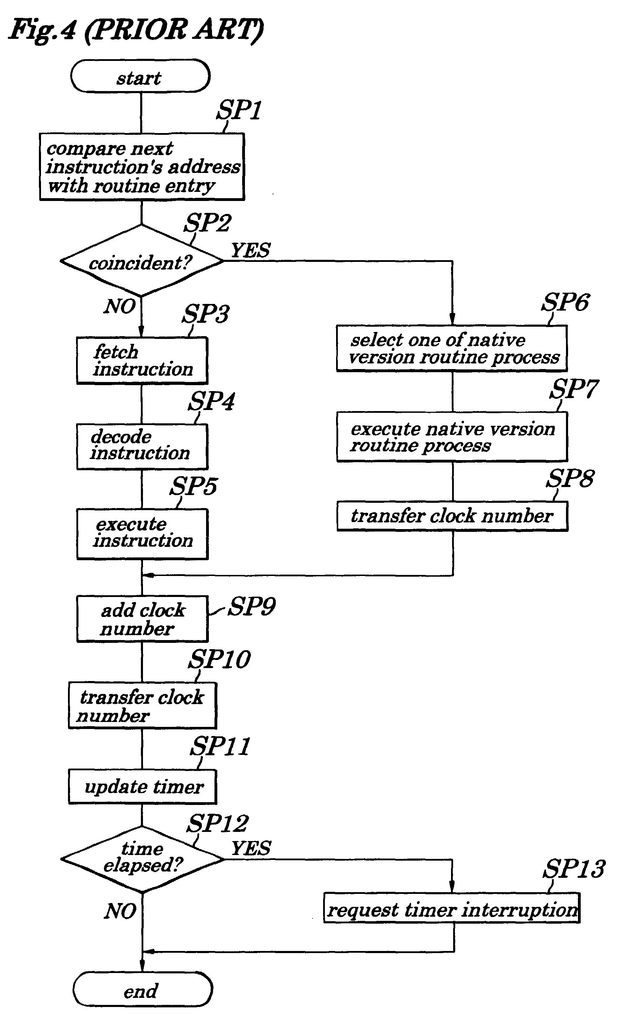

Now, in operation, the conventional simulation apparatus having the above construction will be described with reference to a flowchart shown in Fig. 4.

First, in a step SP1, the address comparison means 14 is placed under the control of the simulation means 4 to compare: the addresses of instruction codes which the simulation means 4 subsequently should execute; with the routine process entries/native entries $13_1$ to $13_n$ which form the entry address table 13, so that the starts of the routine processes are detected. In a step SP2 subsequent to the step SP1, the address comparison means 14 is placed under the control of the simulation means 4 to judge as to whether or not the addresses of the instruction codes coincide with any one of the routine process entries/native entries $13_1$ to $13_n$. When the result of the above comparison is "NOT", the simulation means 4 goes to a step SP3 in order to have the non-routine process simulation means 5 simulate the non-routine processes.

In the step SP3 subsequent to the step SP2, the non-routine process simulation means 5 placed under the control of the simulation means 4 retrieves one instruction from the non-routine processes stored on the non-routine process storage portion 10. The step SP3 is followed by a subsequent step SP4 in which the target CPU interprets the instruction, and the instruction thus interpreted is then executed in a step SP5 subsequent to the step SP4.

On the other hand, when the result of judgement in the step SP2 is "YES", i.e., when the addresses of the instruction codes coincide with any one of the routine process entries/native entries $13_1$ to $13_n$, in order to simulate the native version routine processes, the simulation means 4 goes to a step SP6 in which the simulation means 4 selects one of the native version routine processes, which one corresponds to any one of the routine process entries/native entries $13_1$ to $13_n$, provided that the above any one coincides with the addresses of the instruction codes in the step SP2. The step SP6 is followed by a step SP7 in which the thus selected native version routine processes are executed. The step SP7 is followed by a step SP8 in which the clock numbers of the native version processes are retrieved from the clock number transfer means which correspond to the native version routine processes having been executed. The thus retrieved clock numbers of the native version routine processes are then transferred to the clock number counter means 7.

In a step SP9 subsequent to the step SP8, the clock number counter means 7 adds the clock numbers (which are required to execute the non-routine processes, or are transmitted from the simulation means 4) to a clock number a counting of which begins from the start of simulation. The step SP9 is followed by a subsequent step SP10 in which the clock number transmitted from the simulation means 4 is transmitted to the peripheral simulation means 6.

The step SP10 is followed by a subsequent step SP11 in which a value of the timer 6a is updated. Then, the step SP11 is followed by a subsequent step SP12 in which it is judged as to whether or not a period of time preset in the timer portion 6a has elapsed. When the result of judgement is "YES", the step SP12 is followed by a step SP13 in which: after a timer interruption request is made, a series of processing procedures are completed. On the other hand, in the step SP12, when the result of judgement is "NO", a series of processing procedures are immediately completed.

Problems to be solved by the present invention are as follows: namely, in the conventional simulation apparatus, it is necessary to previously roughly estimate the clock numbers required to execute the native version routine processes $11_1$ to $11_n$.

Consequently, even in a process having passed a check such as debugging checks and the like, the clock number required to execute such process varies each time the process is executed. In other words, as for the process varying in processing time each time the process is executed, for example, a process having a loop which may execute various times the number of which times depends on the conditions of the execution, it is not possible to use it as the native version routine process.

Consequently, as for the process varying in processing time each time it is executed, it is used as the non-routine process which is executed by the non-routine process simulation means 5. However, such non-routine process suffers from its large processing time. Further, since the target CPU is different in processing speed from a CPU (i.e., host CPU) which constitutes a simulation apparatus serving as both the simulation means 4 and the non-routine process simulation means 5, it is impossible for the conventional simulation apparatus to determine a precise clock number. Due to this, it is also impossible for the conventional simulation apparatus to precisely catch an occurrence timing of interruption. Therefore, it is impossible for the conventional simulation apparatus to precisely simulate the target program.

Further, in the conventional simulation apparatus, since the clock numbers required to execute the native version routine processes $11_1$ to $11_n$ are previously roughly estimated and stored in the corresponding clock number transfer means $12_1$ to $12_n$ and controlled therein, it is impossible to simulate an interruption caused during the execution of the individual native version routine processes. The above disadvantages are problems inherent in the conventional simulation apparatus.

## SUMMARY OF THE INVENTION

Under such circumstances, the present invention was made. Consequently, it is an object of the present invention to provide a simulation method, simulation apparatus and a storage medium storing a simulation program, in which the operation of a system (i.e., a target system such as facsimile machines, image processing units and the like, that is intended to be developed) is simulated by executing a program (i.e., target program) which a central processing unit, i.e., CPU forming the target system should execute, wherein: a precise and high-speed simulation is realized even when a processing time of a process varies each time the process is executed; and, even when an interruption is caused during the execution of routine processes, such interruption may be simulated.

According to a first aspect of the present invention, the above object of the present invention is accomplished by providing:

A simulation method for simulating in operation a system intended to be developed, by executing a program which a first central processing unit constituting the system should execute, the method comprising the steps of:

constructing the program out of: a plurality of routine processes which are of general-purpose type and have passed a check; and, a plurality of non-routine processes still not passed the check, the non-routine processes being constructed of a plurality of instructions;

sequentially carrying out, in a first process, a plurality of native version routine processes which are executable without interpretation, the native version routine processes corresponding to the plurality of routine processes;

carrying out, in a second process, the plurality of the instructions one by one with interpretation;
measuring, in a third process, on the basis of a coefficient representing a difference in performance between the first central processing unit and a second central processing unit, a first time immediately before the native version routine processes are carried out; and, a second time immediately before completion of execution of the native version routine processes, or immediately before the second process is interrupted, the second central processing unit carrying out the first and the second process;
measuring, in a fourth process, on the basis of the first and the second time and the coefficient, a time taken for the second central processing unit to execute the program.

According to a second aspect of the present invention, the above object of the present invention is accomplished by providing:

A simulation method for simulating in operation a system intended to be developed, by executing a program which a first central processing unit constituting the system should execute, the method comprising the steps of:

constructing the program out of: a plurality of routine processes which are of general-purpose type and have passed a check; and, a plurality of non-routine processes which still do not pass the check, the non-routine processes being constructed of a plurality of instructions;
sequentially carrying out, in a first process, a plurality of native version routine processes which are executable without interpretation, the native version routine processes corresponding to the plurality of routine processes;
carrying out, in a second process, the plurality of the instructions one by one with interpretation;
wherein: in the first process, a first time point immediately before an execution of the native version routine processes is measured; during the execution of the native version routine processes, a first period of time between the first time point and a first interruption time when a first interruption occurs is calculated; a coefficient representing a difference in performance between the first central processing unit and the second central processing unit which carries out the first and the second processes is calculated; and, a second period of time between the first time point and a second interruption time when a second interruption occurs is calculated in the first central processing unit on the basis of the first period of time during the execution of the routine processes corresponding to the native version routine processes; a second time point immediately before completion or interruption of the execution of the native version routine processes is measured after the start in execution of the native version routine processes until the second period of time has elapsed, or until the native version routine processes have been completed; and, a third time point which is required of the first central processing unit for executing the program is calculated on the basis of the first and the second time point and the coefficient.

According to a third aspect of the present invention, the above object of the present invention is accomplished by providing:

The simulation method as set forth in the first aspect of the present invention, wherein:

the coefficient represents a ratio in processing speed of the first central processing unit to the second central processing unit for executing the first and the second processes.

According to a fourth aspect of the present invention, the above object of the present invention is accomplished by providing:
The simulation method as set forth in the second aspect of the present invention, wherein:

the coefficient represents a ratio in processing speed of the first central processing unit to the second central processing unit for executing the first and the second processes.

According to a fifth aspect of the present invention, the above object of the present invention is accomplished by providing:
The simulation method as set forth in the first aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a sixth aspect of the present invention, the above object of the present invention is accomplished by providing:
The simulation method as set forth in the second aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a seventh aspect of the present invention, the above object of the present invention is accomplished by providing:
The simulation method as set forth in the third aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to an eighth aspect of the present invention, the above object of the present invention is accomplished by providing:
The simulation method as set forth in the first aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and in the first process, the plurality of native version routine processes are sequentially retrieved from the native version routine process storage portion and executed.

According to a ninth aspect of the present invention, the above object of the present invention is accomplished by providing:
The simulation method as set forth in the second aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and in the first process, the plurality of native version routine processes are sequentially retrieved from the native version routine process storage portion and executed.

According to a tenth aspect of the present invention, the above object of the present invention is accomplished by providing:
The simulation method as set forth in the third aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and

in the first process, the plurality of native version routine processes are sequentially retrieved from the native version routine process storage portion and executed.

According to a eleventh aspect of the present invention, the above object of the present invention is accomplished by providing:

The simulation method as set forth in the fourth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and in the first process, the plurality of native version routine processes are sequentially retrieved from the native version routine process storage portion and executed.

According to a twelfth aspect of the present invention, the above object of the present invention is accomplished by providing:

The simulation method as set forth in the fifth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and in the first process, the plurality of native version routine processes are sequentially retrieved from the native version routine process storage portion and executed.

According to a thirteenth aspect of the present invention, the above object of the present invention is accomplished by providing:

The simulation method as set forth in the sixth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and

in the first process, the plurality of native version routine processes are sequentially retrieved from the native version routine process storage portion and executed.

According to a fourteenth aspect of the present invention, the above object of the present invention is accomplished by providing:

The simulation method as set forth in the seventh aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and in the first process, the plurality of native version routine processes are sequentially retrieved from the native version routine process storage portion and executed.

According to a fifteenth aspect of the present invention, the above object of the present invention is accomplished by providing:

A simulation apparatus for simulating in operation a system intended to be developed, by executing a program which a first central processing unit constituting the system should execute, the program being constructed of a plurality of routine processes and a plurality of non-routine processes still not passed the check, wherein the plurality of routine processes are of general-purpose type and have passed a check, and the non-routine processes are constructed of a plurality of instructions, the apparatus comprising:

a first simulation means for sequentially carrying out, in a first process, a plurality of native version routine processes which are executable without interpretation, the native version routine processes corresponding to the plurality of routine processes; a second simulation means for carrying out, in a second process, the plurality of the instructions one by one with interpretation; a coefficient storage portion in which a coefficient representing a difference in performance between the first central processing unit and the first and the second simulation means is previously stored; a first time measuring means for determining a first and a second time point on the basis of the coefficient, wherein the first time point is a time immediately before the first simulation means executes the native version routine processes, and, the second time is a time immediately before completion, or interruption of execution of the native version routine processes; and

a second time measuring means for measuring a period of time taken for the central processing unit to execute the program on the basis of the first and the second time point and the coefficient.

According to a sixteenth aspect of the present invention, the above object of the present invention is accomplished by providing:

A simulation apparatus for simulating in operation a system intended to be developed, by executing a program which a first central processing unit constituting the system should execute, the program being constructed of a plurality of routine processes and a plurality of non-routine processes still not passed the check, wherein the plurality of routine processes are of general-purpose type and have passed a check, and the non-routine processes are constructed of a plurality of instructions, the apparatus comprising:

a first simulation means for sequentially carrying out, in a first process, a plurality of native version routine processes which are executable without interpretation, the native version routine processes corresponding to the plurality of routine processes;

a second simulation means for carrying out, in a second process, the plurality of the instructions one by one with interpretation;

a coefficient storage portion in which a coefficient representing a difference in performance between the first central processing unit and the first and the second simulation means is previously stored;

a first time measuring means for determining a first and a second time point and for calculating a first period of time and a second period of time on the basis of the coefficient and the first period of time, wherein: the first time point is a time immediately before the first simulation means executes the native version routine processes; the second time point is a time immediately before completion or interruption of execution of the native version routine processes; the first period of time is a time from the first time point to an interruption time when an interruption occurs during the execution of the native version routine processes; and, the second period of time is a time from the first time point to an interruption time when an interruption occurs when the central processing unit executes the routine processes corresponding to the native version routine processes; and

a second time measuring means for measuring a third period of time taken for the central processing unit to execute the program on the basis of the first and the second time point and the coefficient;

wherein the first simulation means executes the native version routine processes until the second period of time has elapsed, or until the native version routine processes have been completed.

According to a seventeenth aspect of the present invention, the above object of the present invention is accomplished by providing:

The simulation apparatus as set forth in the fifteenth aspect of the present invention, wherein:

the coefficient represents a ratio in processing speed of the central processing unit to the first and the second simulation means.

According to an eighteenth aspect of the present invention, the above object of the present invention is accomplished by providing:

The simulation apparatus as set forth in the sixteenth aspect of the present invention, wherein:

the coefficient represents a ratio in processing speed of the central processing unit to the first and the second simulation means.

According to a nineteenth aspect of the present invention, the above object of the present invention is accomplished by providing:

The apparatus for heat-treating the substrate, as set forth in the sixth aspect of the present invention, wherein:

According to a nineteenth aspect of the present invention, the above object of the present invention is accomplished by providing:

The simulation apparatus as set forth in the fifteenth aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a twentieth aspect of the present invention, the above object of the present invention is accomplished by providing:

The simulation apparatus as set forth in sixteenth aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a twenty-first aspect of the present invention, the above object of the present invention is accomplished by providing:
The simulation apparatus as set forth in the seventeenth aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a twenty-second aspect of the present invention, the above object of the present invention is accomplished by providing:
The simulation apparatus as set forth in the eighteenth aspect of the present invention, wherein:

each of the routine processes is incorporated in an operating system, and constructed of at least one of: basic functions and procedures both called out in the program; functions and procedures both defined by a user and having passed a check; functions and procedures previously prepared in processing systems in programming languages; and, functions and procedures previously prepared in the form of instruction codes.

According to a twenty-third aspect of the present invention, the above object of the present invention is accomplished by providing:
The simulation apparatus as set forth in the fifteenth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-fourth aspect of the present invention, the above object of the present invention is accomplished by providing:
The simulation apparatus as set forth in the sixteenth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-fifth aspect of the present invention, the above object of the present invention is accomplished by providing:
The simulation apparatus as set forth in the seventeenth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-sixth aspect of the present invention, the above object of the present invention is accomplished by providing:
The simulation apparatus as set forth in the eighteenth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-seventh aspect of the present invention, the above object of the present invention is accomplished by providing:

The simulation apparatus as set forth in the nineteenth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-eighth aspect of the present invention, the above object of the present invention is accomplished by providing:

The simulation apparatus as set forth in the twentieth aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a twenty-ninth aspect of the present invention, the above object of the present invention is accomplished by providing:

The simulation apparatus as set forth in the twenty-first aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a thirtieth aspect of the present invention, the above object of the present invention is accomplished by providing:

The simulation apparatus as set forth in the twenty-second aspect of the present invention, wherein:

the plurality of native version routine processes are realized through native codes through which the second central processing unit executing both the first and the second process may execute the plurality of routine processes without interpretation; the plurality of native version routine processes thus realized through the native codes are previously stored in a native version routine process storage portion; and the first simulation means sequentially retrieves the plurality of native version routine processes from the native version routine process storage portion and executed.

According to a thirty-first aspect of the present invention, the above object of the present invention is accomplished by providing:

A storage medium storing thereon a simulation program for realizing a function described in any one of the first to thirtieth aspects of the present invention.

With the present invention, it is possible to simulate a process precisely at high processing speed even when the process varies in processing time each time it is executed.

Further, it is also possible for the present invention to simulate an interruption caused during an execution of a routine process.

BRIEF DESCRIPTION OF THE DRAWINGS

The above and other objects, advantages and features of the present invention will be more apparent from the following description taken in conjunction with the accompanying drawings in which:

Fig. 1 is a block diagram of an electric architecture of a simulation apparatus of the embodiment of the present invention;
Fig. 2 is a flow chart indicating the operation of the simulation apparatus shown in Fig. 1;
Fig. 3 is a block diagram of an electric architecture of the conventional simulation apparatus; and
Fig. 4 is a flow chart indicating the operation of the conventional simulation apparatus shown in Fig. 3.

DETAILED DESCRIPTION OF THE PREFERRED EMBODIMENTS

Now, the present invention will be described in detail with reference to the accompanying drawings.

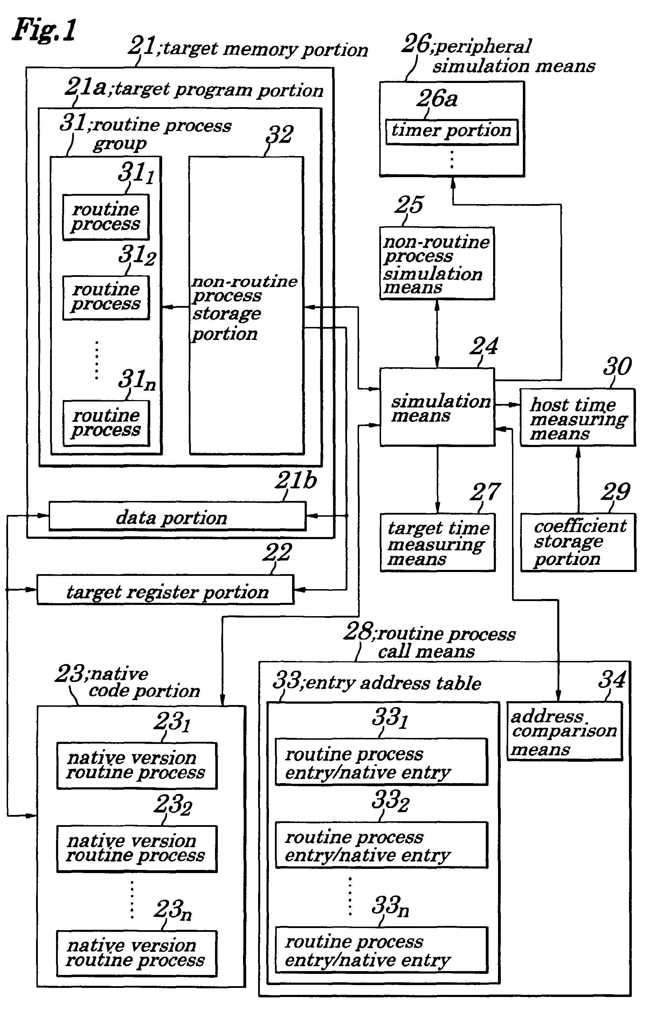

Fig. 1 shows a block diagram of an electric architecture of a simulation apparatus of an embodiment of the present invention.

The simulation apparatus of this embodiment of the present invention is substantially constructed of: a target memory portion 21; a target register portion 22; a native code portion 23; a simulation means 24; a non-routine process simulation means 25; a peripheral simulation means 26; a target time measuring means 27; a routine process call means 28; a coefficient storage portion 29; and, a host time measuring means 30.

The target memory portion 21 is a memory simulating a target apparatus, and is constructed of: a target program portion 21a, stored on which is a target program to be executed by a target CPU constituting the target system; and, a data portion 21b, stored on which is data used during an execution of the target program.

The target program portion 21a is constructed of a routine process group 31 and a non-routine process storage portion 32. The routine process group 31 is constructed of a plurality of routine processes $13_1$ to $13_n$ of general-purpose type having passed a check such as debugging processes and the like, for example such as the above-mentioned system calls, run-time library functions, user library functions, standard library functions, and like functions. Although the user library functions are originally defined in a source program, however, in the present invention, those of general-purpose type and having passed a check such as debugging processes and the like are stored in a predetermined storage portion, and the thus stored ones are defined as the user library functions. As for the standard library functions, they are previously provided in a processing system such as a compiler with a programming language used in describing the source program, and, therefore capable of being used without any user's definition, the standard library functions being stored in a predetermined storage portion.

On the other hand, stored on the non-routine process storage portion 32 are the non-routine processes which are inherent in the target program and still have not passed a check such as debugging processes and the like.

The target register portion 22 is a register which simulates a register used by the target CPU. The native code portion 23 is constructed of a plurality of native version routine processes $23_1$ to $23_n$ which are the same operation's native codes converted from the routine processes $31_1$ to $31_n$, respectively, and capable of being executed by the simulation means 24.

The simulation means 24 controls respective portions of the simulation apparatus to sequentially execute the native version routine processes $23_1$ to $23_n$. The non-routine process simulation means 25 is placed under the control of the simulation means 24 to interpret and execute, one-instruction by one-instruction, the non-routine processes stored in the non-routine process storage portion 32. The peripheral simulation means 26 is constructed of the timer portion 26a and the like which causes interruptions at predetermined time intervals, and operates in synchronization with an execution time transmitted from the simulation means 24 to simulate in operation the peripheral circuits (for example, such as timers, external communication units and the like.) other than the target CPU.

In simulating in operation the target system, based on a coefficient $\alpha$ described later, the target time measuring means 27 measures a target period of time required to execute the target program. The routine process call means 28 is constructed of an entry address table 33 and an address comparison table 34. The entry address table 33 is constructed of a plurality of pairs of routine process entries/native entries $33_1$ to $33_n$, each pair of which is a combination of: each of routine process entries representing start addresses of the routine processes $31_1$ to $31_n$ in the target program; and, each of native entries representing start addresses of the corresponding native version routine processes $23_1$ to $23_n$ in the native code portion 23. In operation, the address comparison means 34 compares: addresses of the instruction codes which the simulation means 24 should next execute; with the routine process entries/native entries $33_1$ to $33_n$ forming the entry address table 33, and detects the starts of the routine processes.

Previously stored in the coefficient storage portion 29 is the coefficient $\alpha$ representing a difference in performance between the target CPU and the host CPU which may serve as the simulation means 24 and the non-routine process simulation means 25. For example, when the target CPU has a processing speed of 100 MIPS (Mega Instructions Per Second) and the host CPU has a processing speed of 20 MIPS, the coefficient $\alpha$ is as follows: $\alpha = 20/100 = 1/5$. The host time measuring means 30 measures a current time of the host CPU (hereinafter referred to as the current host time) during a simulation of the target system.

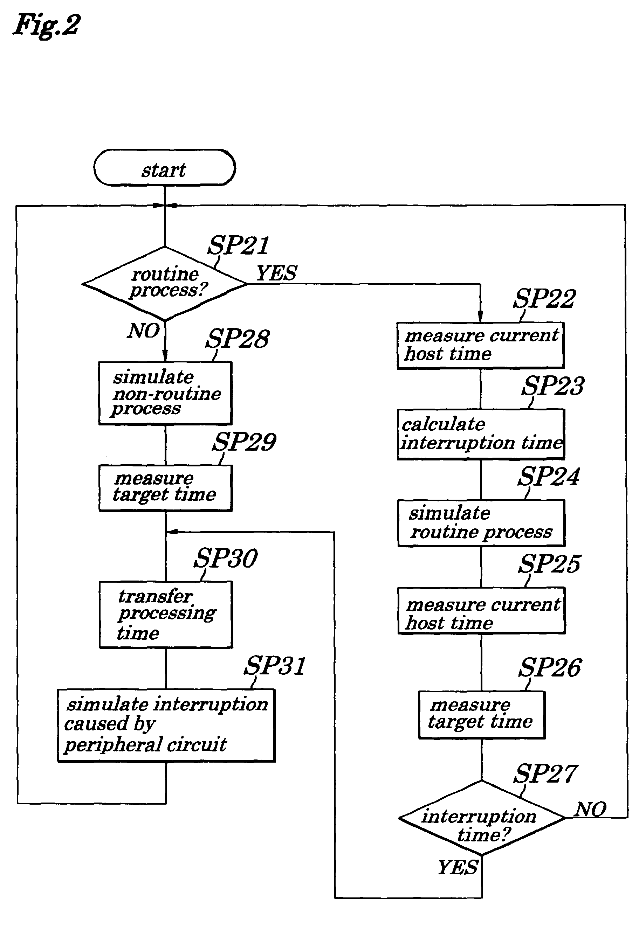

Now, the simulation apparatus of the present invention having the above construction will be described in operation, with reference to a flowchart shown in Fig. 2.

First, in a step SP21, the address comparison means 34 is placed under the control of the simulation means 24 to compare: the addresses of the instruction codes which next the simulation means 24 should execute; with the routine process entries/native entries $33_1$ to $33_n$ forming the entry address table 33, and judges as to whether or not the starts of the routine processes are detected. When the result of the above judgement in the step SP21 is "YES", the simulation means 24 goes to a step SP22, in which the host time measuring means 30 is placed under the control of the simulation means 24 to measure a current host time $T_{H1}$. After that, the step SP22 is followed by a step SP23, in which the host time measuring means 30 is still placed under the control of the simulation means 24 to calculate a period of time $T_I$

between the current host time $T_{H1}$ and a time when an interruption occurs (hereinafter referred to as the interruption time), and further to retrieve the coefficient $\alpha$ from the coefficient storage portion 29. The above period of time $T_{TI}$ is calculated using the following equation (1):

$$T_{TI} = \alpha \cdot T_I \qquad (1)$$

After that, the step SP23 is followed by a subsequent step SP24 in which the simulation means 24 simulates the routine processes until the period of time $T_{TI}$ has elapsed or until the simulations of the routine processes are completed. In other words, in the step SP24, the simulation means 24 selects ones of the native version routine processes $23_1$ to $23_n$ corresponding to any ones of the routine process entries/native entries $33_1$ to $33_n$ specified in the step SP21, and executes the thus selected ones of the native version routine processes $23_1$ to $23_n$ by performing a suitable operation and the like, for example, by loading the data stored on the data portion 21b of the target memory portion 21 onto the target register portion 22. Then, the step SP24 is followed by a step SP25 in which the host time measuring means 30 is placed under the control of the simulation means 24 to measure a current host time $T_{H2}$ . The step SP25 is followed by a step SP26 in which the target time measuring means 27 is placed under the control of the simulation means 24 to measure a target time T according to the following equation (2) with respect to a reference time which is a start time of the target program:

$$T = T + \alpha \cdot (T_{H2} - T_{TI}) \qquad (2)$$

The step SP26 is followed by a step SP27 in which the simulation means 24 judges as to whether or not the target time reaches the interruption time, i.e., whether or not the time $T_{TI}$ has elapsed. More specifically, this judgement is formed on the basis of both the target time T and the conditions of a preset interruption (for example, such as an interruption caused at a time of the hundredth of clock counted from the start of the target program).

In the step SP27, when the result of judgement is "NO", it is judged that the simulations of the routine processes are completed. As a result, the step SP27 returns to the step SP21 in order to execute a subsequent instruction code. On the other hand, in the step SP27, when the result of judgement is "YES", i.e., when the target time T reaches the interruption time, the simulation of the routine processes executed by the simulation means 24 is interrupted, so that the processing procedure goes to a step SP30.

Further, in the step SP21, when the result of judgement is "NO", i.e., when the address comparison means 34 compares: the addresses of the instruction codes which next the simulation means 24 should execute; with the routine process entries/native entries $33_1$ to $33_n$ forming the entry address table 33 and does not detect any start of the routine processes, the simulation means 24 goes to a step SP28 in order to have the non-routine process simulation means 25 execute the simulations of the non-routine processes.

In the step SP28, the non-routine process simulation means 25 is placed under the control of the simulation means 24 to retrieve only one instruction of the non-routine processes stored on the non-routine process storage portion 32 of the target memory portion 21 from the non-routine process storage portion 32, identify which instruction of the target CPU is retrieved, and to execute the instruction thus identified. Consequently, the non-routine process simulation means 25 executes the non-routine processes by loading the data stored on the data portion 21b of the target memory portion 21 onto the target register portion 22. Then, the simulation means 24 confirms the completion of the non-routine processes in the step SP28 and goes to a step SP29.

In the step SP29, the target time measuring means 27 is placed under the control of the simulation means 24 to measure the target time T according to the following equation (3):

$$T = T + T_{NS} \qquad (3)$$

Where: $T_{NS}$ is a processing time taken for the target CPU to execute one instruction of the non-routine processes.

The step SP29 is followed by a step SP30 in which: transmitted from the simulation means 24 to the peripheral simulation means 26 is a processing time {$\alpha \cdot (T_{H2} - T_{TI})$} measured in the step SP27; or a processing time $T_{NS}$ measured in the step SP29. The step SP30 is followed by a step SP31 in which the peripheral simulation means 26 is placed under the control of the simulation means 24 to simulate an interruption process caused by the peripheral circuits (for example, such as timers, external communication units and the like). After that, in order to execute a subsequent instruction code, or in order to restart the simulation of the routine processes having been interrupted, the processing procedure returns to the step SP21. As for the interruption simulation of the peripheral circuits, for example, when an interruption simulation of the timer portion 26a is carried out, the peripheral simulation means 26 updates a value of the timer portion 26a and forces the timer portion 26a to judge as to whether or not a predetermined period of time preset in the timer portion 26 has elapsed. When the preset period of time has elapsed, a timer interruption request is made. On the other hand, when the preset period of time still remains, the processing procedure returns to the step SP21 without taking any action.

As described above, in this embodiment of the present invention having the above construction, in contrast with the conventional simulation apparatus, since there is no need to previously roughly estimate the clock number required to execute the native version routine processes $23_1$ to $23_n$, it is possible to execute even the processes, which vary in processing time each time the processes are executed, as the native version routine processes. Consequently, in comparison with the prior art, the present invention may lessen a load imposed on the non-routine process simulation means 25 and reduce the processing time.

Further, in this embodiment of the present invention, when the native version routine processes are executed, a time immediately before execution, or immediately before completion or interruption of the execution is measured by the host time measuring means 30, so that the processing time of the native routine process is determined, whereby the target time measuring means 27 measures the target time on the basis of both the processing time of the native routine process and the coefficient $\alpha$ which represents a difference in performance between the target CPU and the host CPU. Consequently, it is possible for the present invention to simulate any interruption caused during execution of the individual native version routine processes.

Due to this, in the present invention, it is possible to obtain a precise target time and precisely catch in occurrence timing the interruption even when there is a difference in performance between the target CPU and the host CPU, which makes it possible to precisely simulate the target program at high processing speed.

In the above embodiments, although the routine process call means 28 is constructed of the entry address table 33 and the address comparison means 34, the routine process call means 28 is not limited to these components 33, 34 only. For example, as disclosed in Japanese Patent Application Laid-Open No. Hei10-31595, the routine process call means 28 may be constructed of: a routine process rewriting means which rewrites instructions stored at entry addresses of all the routine processes $31_1$ to $31_n$ of a routine process group 31 so as to be certain instructions such as undefined instructions and the like which are not used in a program in normal times to cause an exception when executed by a target CPU, and further rewrites several bits subsequent to these rewritten instructions at the entry addresses of native version routine processes $23_1$ to $23_n$ ; and, an undefined instruction detection means which detects rewritten undefined instructions to call the corresponding native version routine processes. In the above construction, it is possible to eliminate the entry address table 33.

Also, in the embodiments of the present invention, although all the means are described as hardware elements, these means may be software elements. In other words, the simulation apparatus described above may be constructed of: a host CPU; an internal storage unit such as ROMs, RAMs and the like; a FDD (i.e., floppy disk drive); HDD (i.e., hard disk drive); an external storage unit such as CD-ROM drives and the like; an output means; and, a computer with an input means, wherein all the simulation means 24, non-routine process simulation means 25, peripheral simulation means 26, target time measuring means 27, host time measuring means 30, and the address comparison means 34 are realized by a CPU. It is also possible to realize all the functions of these components by using a simulation program which may be stored on a semiconductor memory such as ROMs, FDs, HDs, CD-ROMs and like storage media. In this case, the above-mentioned internal storage unit and the external storage unit form all the target memory portion 21, target register portion 22, native code portion 23, coefficient storage portion 29, and the entry address table 33. On the other hand, the simulation program is retrieved from the storage medium and written into the host CPU to control the operation of the host CPU. When the simulation program is activated, the host CPU serves as each of the simulation means 24, non-routine process simulation means 25, peripheral simulation means 26, target time measuring means 27, host time measuring means 30, and the address comparison means 34, and are placed under the control of the simulation program to execute the above-mentioned processes.

It is thus apparent that the present invention is not limited to the above embodiments but may be changed and modified without departing from the scope and spirit of the invention.

Finally, the present application claims the priority of Japanese Patent Application No. Hei10-081010 filed on March 27, 1998, which is herein incorporated by reference.

## Claims

1. A simulation method for simulating in operation a system intended to be developed, by executing a program which a first central processing unit constituting the system should execute, the method comprising the steps of:

   constructing said program out of: a plurality of routine processes ($31_1$ to $31_n$) which are of general-purpose type and have passed a check; and, a plurality of non-routine processes still not passed said check, said non-routine processes being constructed of a plurality of instructions;
   sequentially carrying out, in a first process, a plurality of native version routine processes ($23_1$ to $23_n$) which are executable without interpretation, said native version routine processes ($23_1$ to $23_n$) corresponding to said plurality of routine processes ($31_1$ to $31_n$);
   carrying out, in a second process, said plurality of said instructions one by one with interpretation;

measuring, in a third process, on the basis of a coefficient representing a difference in performance between said first central processing unit and a second central processing unit, a first time-immediately before said native version routine processes ($23_1$ to $23_n$) are carried out; and, a second time immediately before completion of execution of said native version routine processes ($23_1$ to $23_n$), or immediately before said second process is interrupted, said second central processing unit carrying out said first and said second process;

measuring, in a fourth process, on the basis of said first and said second time and said coefficient, a time taken for said second central processing unit to execute said program.

2. A simulation method for simulating in operation a system intended to be developed, by executing a program which a first central processing unit constituting said system should execute, the method comprising the steps of:

constructing said program out of: a plurality of routine processes ($31_1$ to $31_n$) which are of general-purpose type and have passed a check; and, a plurality of non-routine processes which still do not pass said check, said non-routine processes being constructed of a plurality of instructions;

sequentially carrying out, in a first process, a plurality of native version routine processes ($23_1$ to $23_n$) which are executable without interpretation, said native version routine processes ($23_1$ to $23_n$) corresponding to said plurality of routine processes ($31_1$ to $31_n$);

carrying out, in a second process, said plurality of said instructions one by one with interpretation;

wherein: in said first process, a first time point immediately before the execution of said native version routine processes ($23_1$ to $23_n$) is measured; during the execution of said native version routine processes ($23_1$ to $23_n$), a first period of time between said first time point and a first interruption time when a first interruption occurs is calculated; a coefficient representing a difference in performance between said first central processing unit and said second central processing unit which carries out said first and said second processes is calculated; and, a second period of time between said first time point and a second interruption time when a second interruption occurs is calculated in said first central processing unit on the basis of said first period of time during the execution of said routine processes ($31_1$ to $31_n$) corresponding to said native version routine processes ($23_1$ to

$23_n$); a second time point immediately before completion or interruption of the execution of said native version routine processes ($23_1$ to $23_n$) is measured after the start in execution of said native version routine processes ($23_1$ to $23_n$) until said second period of time has elapsed, or until said native version routine processes ($23_1$ to $23_n$) have been completed; and, a third time point which is required of said first central processing unit for executing said program is calculated on the basis of said first and said second time point and said coefficient.

3. The simulation method as set forth in claim 1, wherein:

said coefficient represents a ratio in processing speed of said first central processing unit to said second central processing unit for executing said first and said second processes.

4. The simulation method as set forth in claim 2, wherein:

said coefficient represents a ratio in processing speed of said first central processing unit to said second central processing unit for executing said first and said second processes.

5. The simulation method as set forth in claim 1, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

6. The simulation method as set forth in claim 2, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

7. The simulation method as set forth in claim 3, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

8. The simulation method as set forth in claim 1, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
in said first process, said plurality of native version routine processes ($23_1$ to $23_n$) are sequentially retrieved from said native version routine process storage portion and executed.

9. The simulation method as set forth in claim 2, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
in said first process, said plurality of native version routine processes ($23_1$ to $23_n$) are sequentially retrieved from said native version routine process storage portion and executed.

10. The simulation method as set forth in claim 3, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
in said first process, said plurality of native version routine processes ($23_1$ to $23_n$) are sequentially retrieved from said native version routine process storage portion and executed.

11. The simulation method as set forth in claim 4, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
in said first process, said plurality of native version routine processes ($23_1$ to $23_n$) are sequentially retrieved from said native version routine process storage portion and executed.

12. The simulation method as set forth in claim 5, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
in said first process, said plurality of native version routine processes ($23_1$ to $23_n$) are sequentially retrieved from said native version routine process storage portion and executed.

13. The simulation method as set forth in claim 6, wherein:

said plurality of native version routine processes ($23_1$ to $23_n$) are realized through native codes through which said second central processing unit executing both said first and said second process may execute said plurality

of routine processes ($31_1$ to $31_n$) without interpretation;

said plurality of native version routine processes ($23_1$ to $23_n$) thus realized through said native codes are previously stored in a native version routine process storage portion; and

in said first process, said plurality of native version routine processes ($23_1$ to $23_n$) are sequentially retrieved from said native version routine process storage portion and executed.

14. The simulation method as set forth in claim 7, wherein:

said plurality of native version routine processes ($23_1$ to $23_n$) are realized through native codes through which said second central processing unit executing both said first and said second process may execute said plurality of routine processes ($31_1$ to $31_n$) without interpretation;

said plurality of native version routine processes ($23_1$ to $23_n$) thus realized through said native codes are previously stored in a native version routine process storage portion; and

in said first process, said plurality of native version routine processes ($23_1$ to $23_n$) are sequentially retrieved from said native version routine process storage portion and executed.

15. A simulation apparatus for simulating in operation a system intended to be developed, by executing a program which a first central processing unit constituting said system should execute, said program being constructed of a plurality of routine processes ($31_1$ to $31_n$) and a plurality of non-routine processes still not passed said check, wherein said plurality of routine processes ($31_1$ to $31_n$) are of general-purpose type and have passed a check, and said non-routine processes are constructed of a plurality of instructions, said apparatus comprising:

a first simulation means (24) for sequentially carrying out, in a first process, a plurality of native version routine processes ($23_1$ to $23_n$) which are executable without interpretation, said native version routine processes ($23_1$ to $23_n$) corresponding to said plurality of routine processes ($31_1$ to $31_n$);

a second simulation means (25) for carrying out, in a second process, said plurality of said instructions one by one with interpretation;

a coefficient storage portion (29) in which a coefficient representing a difference in performance between said first central processing unit and said first and said second simulation means (24, 25) is previously stored;

a first time measuring means (30) for determining a first and a second time point on the basis of said coefficient, wherein said first time point is a time immediately before said first simulation means (24) executes said native version routine processes ($23_1$ to $23_n$), and, said second time is a time immediately before completion, or interruption of execution of said native version routine processes ($23_1$ to $23_n$); and

a second time measuring means (27) for measuring a period of time taken for said central processing unit to execute said program on the basis of said first and said second time point and said coefficient.

16. A simulation apparatus for simulating in operation a system intended to be developed, by executing a program which a first central processing unit constituting said system should execute, said program being constructed of a plurality of routine processes ($31_1$ to $31_n$) and a plurality of non-routine processes still not passed said check, wherein said plurality of routine processes ($31_1$ to $31_n$) are of general-purpose type and have passed a check, and said non-routine processes are constructed of a plurality of instructions, the apparatus comprising:

a first simulation means (24) for sequentially carrying out, in a first process, a plurality of native version routine processes ($23_1$ to $23_n$) which are executable without interpretation, said native version routine processes ($23_1$ to $23_n$) corresponding to said plurality of routine processes ($31_1$ to $31_n$);

a second simulation means (25) for carrying out, in a second process, said plurality of said instructions one by one with interpretation;

a coefficient storage portion (29) in which a coefficient representing a difference in performance between said first central processing unit and said first and said second simulation means (24, 25) is previously stored;

a first time measuring means (30) for determining a first and a second time point and for calculating a first period of time and a second period of time on the basis of said coefficient and said first period of time, wherein: said first time point is a time immediately before said first simulation means (24) executes said native version routine processes ($23_1$ to $23_n$); said second time point is a time immediately before completion or interruption of execution of said native version routine processes ($23_1$ to $23_n$); said first period of time is a time from said first time point to an interruption time when an interruption occurs during the execution of said native version routine processes ($23_1$ to $23_n$); and, said second period of time is a time from said first time point to an interruption time when an interruption occurs when said central processing unit executes said routine processes ($31_1$ to $31_n$) corresponding to said native version routine processes ($23_1$ to $23_n$); and

a second time measuring means (27) for measuring a third period of time taken for said central processing unit to execute said program on the basis of said first and said second time point and said coefficient;

wherein said first simulation means (24) executes said native version routine processes ($23_1$ to $23_n$) until said second period of time has elapsed, or until said native version routine processes ($23_1$ to $23_n$) have been completed.

17. The simulation apparatus as set forth in claim 15, wherein:

said coefficient represents a ratio in processing speed of said central processing unit to said first and said second simulation means (24, 25).

18. The simulation apparatus as set forth in claim 16, wherein:

said coefficient represents a ratio in processing speed of said central processing unit to said first and said second simulation means (24, 25).

19. The simulation apparatus as set forth in claim 15, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

20. The simulation apparatus as set forth in claim 16, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

21. The simulation apparatus as set forth in claim 17, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

22. The simulation apparatus as set forth in claim 18, wherein:

each of said routine processes ($31_1$ to $31_n$) is incorporated in an operating system, and constructed of at least one of: basic functions and procedures both called out in said program; functions and procedures both defined by a user and having passed a check; functions and procedures previously prepared in processing systems in programming languages; and, functions and procedures previously prepared in the form of instruction codes.

23. The simulation apparatus as set forth in claim 15, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
said first simulation means (24) sequentially retrieves said plurality of native version routine processes ($23_1$ to $23_n$) from said native version routine process storage portion and executed.

24. The simulation apparatus as set forth in claim 16, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine proc-

esses ($23_1$ to $23_n$) thus realized through said native codes are previously stored in a native version routine process storage portion; and

said first simulation means (24) sequentially retrieves said plurality of native version routine processes ($23_1$ to $23_n$) from said native version routine process storage portion and executed.

25. The simulation apparatus as set forth in claim 17, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
said first simulation means (24) sequentially retrieves said plurality of native version routine processes ($23_1$ to $23_n$) from said native version routine process storage portion and executed.

26. The simulation apparatus as set forth in claim 18, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
said first simulation means (24) sequentially retrieves said plurality of native version routine processes ($23_1$ to $23_n$) from said native version routine process storage portion and executed.

27. The simulation apparatus as set forth in claim 19, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and

said first simulation means (24) sequentially retrieves said plurality of native version routine processes ($23_1$ to $23_n$) from said native version routine process storage portion and executed.

28. The simulation apparatus as set forth in claim 20, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
said first simulation means (24) sequentially retrieves said plurality of native version routine processes ($23_1$ to $23_n$) from said native version routine process storage portion and executed.

29. The simulation apparatus as set forth in claim 21, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and
said first simulation means (24) sequentially retrieves said plurality of native version routine processes ($23_1$ to $23_n$) from said native version routine process storage portion and executed.

30. The simulation apparatus as set forth in claim 22, wherein:

said plurality of native version routine processes ($23_1$ to $23_n$) are realized through native codes through which said second central processing unit executing both said first and said second process may execute said plurality of routine processes ($31_1$ to $31_n$) without interpretation;
said plurality of native version routine processes ($23_1$ to $23_n$) thus realized through said native codes are previously stored in a native version routine process storage portion; and

said first simulation means (24) sequentially retrieves said plurality of native version routine processes ($23_1$ to $23_n$) from said native version routine process storage portion and executed.

31. A storage medium storing thereon a simulation program for realizing a function described in any one of claims 1 to 30.

32. A computer program product

directly loadable into the internal memory of a digital computer,
comprising software code portions for performing the steps of the method according to any one of claims 1 to 14
when said product is run on a computer

**Fig.1**

21;target memory portion

21a;target program portion

31;routine process group

32

31₁

routine process

31₂

routine process

31ₙ

routine process

non-routine process storage portion

26;peripheral simulation means

26a

timer portion

25

non-routine process simulation means

24

simulation means

30

host time measuring means

27

target time measuring means

29

coefficient storage portion

21b

data portion

22

target register portion

28;routine process call means

23;native code portion

23₁

native version routine process

23₂

native version routine process

23ₙ

native version routine process

33;entry address table

33₁

routine process entry/native entry

33₂

routine process entry/native entry

33ₙ

routine process entry/native entry

34

address comparison means

*Fig.2*

```
                    ┌──────────────┐
                    │    start     │
                    └──────┬───────┘
                           │
          ┌────────────────┤
          │                │
          │           SP21 ▼
          │           ╱ routine ╲        YES ──────────────────┐
          │          ╱  process? ╲───────────────┐             │
          │          ╲          ╱                │             │
          │           ╲_____╱                 │             │
          │             │ NO              SP22   ▼             │
          │        SP28 ▼                 ┌──────────────┐     │
          │      ┌──────────────┐         │ measure current│   │
          │      │ simulate     │         │ host time     │   │
          │      │ non-routine  │         └──────┬────────┘   │
          │      │ process      │          SP23  ▼            │
          │      └──────┬───────┘         ┌──────────────┐    │
          │        SP29 ▼                 │ calculate    │    │
          │      ┌──────────────┐         │ interruption time│ │
          │      │ measure      │         └──────┬────────┘   │
          │      │ target time  │          SP24  ▼            │
          │      └──────┬───────┘         ┌──────────────┐    │
          │             │◄────────┐       │ simulate     │    │
          │        SP30 ▼         │       │ routine process│  │
          │      ┌──────────────┐ │       └──────┬────────┘   │
          │      │ transfer     │ │        SP25  ▼            │
          │      │ processing   │ │       ┌──────────────┐    │
          │      │ time         │ │       │ measure current│  │
          │      └──────┬───────┘ │       │ host time     │   │
          │        SP31 ▼         │       └──────┬────────┘   │
          │   ┌──────────────────┐│        SP26  ▼            │
          │   │ simulate interruption│     ┌──────────────┐   │
          │   │ caused by        ││       │ measure      │    │
          │   │ peripheral circuit│       │ target time  │    │
          │   └──────┬───────────┘│       └──────┬───────┘    │
          │          │            │        SP27  ▼            │
          └──────────┘            │       ╱ interruption ╲ NO │
                                  │       ╲    time?    ╱─────┘
                                  │        ╲_____╱
                                  │             │ YES
                                  └─────────────┘
```

# *Fig.3 (PRIOR ART)* 1;target memory portion

6;peripheral simulation means

*1a;target program portion*

*9;routine process group*

10

6a

timer portion

$9_1$

routine process

$9_2$

routine process

$9_n$

routine process

non-routine process storage portion

non-routine process simulation means

5

4

simulation means

7

*1b*

data portion

clock number counter means

2

target register portion

*3;native code portion*

*11;native code version routine process group*

*12;clock number transfer means group*

*8;routine process call means*

$12_1$

clock number transfer means

*13;entry address table*

$13_1$

routine process entry/native entry

14

address comparison means

$11_1$

native version routine process

$12_2$

clock number transfer means

$13_2$

routine process entry/native entry

$11_2$

native version routine process

$11_n$

native version routine process

$12_n$

clock number transfer means

$13_n$

routine process entry/native entry

## Fig.4 (PRIOR ART)

```
              ( start )

                  │            SP1
      ┌───────────────────────┐
      │ compare next          │
      │ instruction's address │
      │ with routine entry    │
      └───────────────────────┘
                  │        SP2
                 ╱ ╲                    YES
                ╱   ╲─────────────────────────────┐
               ╱ coincident?                       │
                ╲   ╱                               │
                 ╲ ╱                                │
                  │ NO                              │            SP6
                  │         SP3           ┌─────────────────────────┐
          ┌───────────────┐               │ select one of native    │
          │ fetch         │               │ version routine process │
          │ instruction   │               └─────────────────────────┘
          └───────────────┘                         │           SP7
                  │    SP4                ┌─────────────────────────┐
          ┌───────────────┐               │ execute native version  │
          │ decode        │               │ routine process         │
          │ instruction   │               └─────────────────────────┘
          └───────────────┘                         │          SP8
                  │    SP5                ┌─────────────────────────┐
          ┌───────────────┐               │ transfer clock number   │
          │ execute       │               └─────────────────────────┘
          │ instruction   │                         │
          └───────────────┘                         │
                  │◄────────────────────────────────┘
          ┌───────────────┐  SP9
          │ add clock     │
          │ number        │
          └───────────────┘
                  │    SP10
          ┌───────────────┐
          │ transfer clock │
          │ number         │
          └───────────────┘
                  │    SP11
          ┌───────────────┐
          │ update timer  │
          └───────────────┘
                  │        SP12
                 ╱ ╲          YES
                ╱   ╲──────────────────────────┐
               ╱ time ╲                         │
               ╲elapsed?                        │         SP13
                ╲   ╱               ┌─────────────────────────────┐
                 ╲ ╱                │ request timer interruption   │
                  │ NO              └─────────────────────────────┘
                  │◄──────────────────────────┘
              ( end )
```